# EUROPÄISCHE PATENTSCHRIFT

(11) **EP 0 361 150 B1**
(45) Veröffentlichungstag und Bekanntmachung des Hinweises auf die Patenterteilung: **14.12.1994**
(21) Anmeldenummer: 89116453.5
(22) Anmeldetag: 06.09.1989
(51) Int. Cl.: H04B 10/12

(54) **Verfahren zum synchronisierten Umtasten eines Polarisationszustandes eines optischen Sendesignals eines optischen Übertragungssystems mit Überlagerungsempfang und Vorrichtung zur Durchführung des Verfahrens**
Method for the synchronised keying of the polarisation state of an optical signal in an optical transmission system with heterodyne reception, and device for carrying out the method
Procédé pour effectuer un déplacement synchronisé de l'état de polarisation d'un signal optique dans un système de transmission optique à réception hétérodyne et dispositif pour la mise en oeuvre du procédé

(30) Priorität: 30.09.1988 DE 3833274
(43) Veröffentlichungstag der Anmeldung: 04.04.1990
(73) Patentinhaber: SIEMENS AKTIENGESELLSCHAFT, 80333 München (DE)
(72) Erfinder: Auracher, Franz, Dr., D-8021 Baierbrunn (DE); Ebberg, Alfred, Dipl.-Ing., D-8000 München 83 (DE); Noll, Bernd, Dipl.-Ing., D-8000 München 70 (DE); Meissner, Eckhard, Dipl.-Ing., D-8000 München 83 (DE); Rodler, Hermann, Dipl.-Ing., D-8000 München 83 (DE)

(56) Entgegenhaltungen:
- EP-A- 0 241 039
- EP-A- 0 277 427
- WO-A-86/07658
- US-A- 3 956 626
- ELECTRONICS LETTERS, Band 23, Heft 8, 9. April 1987, Seiten 421-422, Stevenage,Herts, GB; E. DIETRICH et al.: "Heterodyne transmission of a 560 Mbit/s opticalsignal by means of polarisation shift keying"

## Beschreibung

Die Erfindung betrifft ein Verfahren zum synchronisierten Umtasten eines Polarisationszustandes eines optischen Sendesignals eines optischen Übertragungssystems mit Überlagerungsempfang nach dem Oberbegriff des Patentanspruchs 1 und eine Vorrichtung zur Durchführung des Verfahrens.

In üblichen optischen Empfängern mit Überlagerungsempfang, beispielsweise optischen Heterodynempfängern, schwankt die Amplitude des Zwischenfrequenzsignals mit der relativen Lage der Polarisationszustände des optischen Datensignals und des optischen Signals eines Lokaloszillators. Es müssen daher Vorkehrungen getroffen werden, um diese Schwankungen möglichst gering zu halten. Die bekanntesten Abhilfen sind die Polarisationsnachführung mittels einer Regelschleife (Electron. Lett. 22 (1986) S. 1341-1343), der Polarisationsquadraturempfang (Electron. Lett. 22 (1987) S. 168-169) oder das Polarisations-Scrambling (Electron. Lett 23 (1987) S. 513514), das ein Verfahren der eingangs genannten Art ist.

Empfänger mit Polarisationsnachführung erreichen zwar theoretisch die höchste Empfindlichkeit, der Aufwand für die Regelung ist jedoch beträchtlich.

Polarisationsquadraturempfänger stellen eine zuverlässige Alternative dar, erfordern jedoch eine Zerlegung optischer Signale in zwei zueinander orthogonal polarisierte Teilsignale und zwei Empfänger für diese Teilsignale.

Bei beiden Methoden ist ein erhöhter Aufwand im Empfänger erforderlich, was bei Anwendungen im Teilnehmerbereich besonders problematisch ist.

Beim Polarisations-Scrambling kann dagegen der erhöhte Aufwand auf die Senderseite verschoben werden. Bei diesem Verfahren wird der Polarisationszustand des Datensignals im allgemeinen mehrmals während der Bitdauer umgetastet, so daß das Zwischenfrequenzsignal einen Mittelwert über unterschiedliche Polarisationszustände darstellt. Theoretisch beträgt der Empfindlichkeitsverlust bei diesem Verfahren gegenüber der idealen Polarisationsnachführung mindestens 3 dB. Für höhere Datenraten besteht das Problem, daß sehr schnelle Polarisationsschalter erforderlich sind und die erforderliche Empfängerbandbreite merklich erhöht wird.

Der Vollständigkeit halber sei darauf hingewiesen, daß eine weitere Möglichkeit für einen polarisationsunempfindlichen Empfang in Electron. Lett 24 (1988) S. 358-360 für ein Zweifilter-FSK-System beschrieben ist, wobei Datensymbolen 0 und 1 entsprechende frequenzgetastete Signale mit zueinander orthogonalen Polarisationszuständen übertragen werden. Bei dieser Möglichkeit besteht das Problem, daß schon bei niedrigen Datenraten hohe Frequenzhübe und somit sehr große Empfängerbandbreiten erforderlich sind und daß das Verfahren nur für ein Zweifilter-FSK-System geeignet ist.

Beim Polarisations-Scrambling, also einem Verfahren der eingangs genannten Art, wird der Polarisationszustand des mit einem bestimmten Takt getakteten optischen Sendesignals in Form einer Bitfolge mit einem relativ zu diesem Takt höherfrequenten und bezüglich dieses Taktes nicht synchronisierten Schaltsignal umgetastet.

Aufgabe der Erfindung ist es, ein Verfahren der eingangs genannten Art anzugeben, bei dem der Polarisationszustand des optischen Sendesignals weniger oft umgetastet werden muß.

Diese Aufgabe wird durch die im kennzeichnenden Teil des Patentanspruchs 1 angegebenen Merkmale gelöst.

Bei dem erfindungsgemäßen Verfahren reicht es aus, nur jeweils eine Umschaltung je Bit, d.h. je Taktperiode des das optische Sendesignal taktenden Taktes durchzuführen. Dies bedeutet, daß ein zum Umtasten des Polarisationszustandes verwendeter Polarisationsschalter nur mit der Taktfrequenz des das optische Sendesignal taktenden Taktes betrieben zu werden braucht. Der Grund liegt darin, daß auf diese Weise während einer der Bitdauer entsprechenden Taktperiode gleichgroße Signalanteile in zueinander orthogonalen Polarisationszuständen am Empfänger des Übertragungssystems eintreffen. Ein Vorteil des erfindungsgemäßen Verfahrens liegt darin, daß es sich sowohl für ASK-Modulation (ASK steht für Amplitude Shift Keying) als auch für FSK-Modulation eignet, wobei es auch bei Einfilter-FSK-Systemen eingesetzt werden kann. Die erforderliche Empfängerbandbreite entspricht jedoch wegen der Umtastung im Bitschwerpunkt, welcher der Bitmitte entspricht, etwa der für übliche Heterodyn-Systeme mit RZ-Kodierung.

Eine bevorzugte Vorrichtung zur Durchführung des erfindungsgemäßen Verfahrens ist im Anspruch 2 angegeben.

Die Erfindung wird anhand der Figur in der nachfolgenden Beschreibung beispielhaft näher erläutert.

Die Figur zeigt in schematischer Darstellung ein Ausführungsbeispiel einer Vorrichtung zur Durchführung des erfindungsgemäßen Verfahrens in einem optischen Heterodyn-Übertragungssystem.

Das in der Figur dargestellte Heterodyn-Übertragungssystem besteht in herkömmlicher Weise aus einem Taktgenerator 1 zur Erzeugung des bestimmten, das optische Sendesignal taktenden Taktes in Form elektrischer Taktimpulse I_{T} mit einer Taktperiode T_{B}, einer von dem bestimmten Takt getakteten Modulationseinrichtung 2, in welcher ein dieser Einrichtung 2 zugeführtes elektrisches Datensignal d(t) in Form einer Bitfolge mit dem bestimmten Takt getaktet und moduliert und an einem Ausgang A der Modulationseinrichtung 2 als ein elektrisches, mit dem bestimmten Takt getaktetes ASK- oder FSK-moduliertes Signal ausgegeben wird, aus einem elektrooptischen Wandler 3, beispielsweise einer Laserdiode, die das am Ausgang A ausgegebene modulierte und getaktete elektrische Signal in ein entsprechendes mit dem bestimmten Takt getaktetes, polarisiertes ASK- oder FSK-moduliertes optisches Signal umwandelt, aus einem Polarisationsumschalter 4, dem das modulierte und getaktete polarisierte optische Signal aus dem Wandler 3 zugeführt ist und der den Polarisationszustand dieses Signals laufend umtastet, aus einer optischen Übertragungsstrecke 5, beispielsweise eine optische Faser, die das modulierte und getaktete sowie polarisationsumgetastete optische Signal aus dem Polarisationsumschalter einem herkömmlichen optischen ASK-oder FSK-Überlagerungsempfänger 6 zuleitet, aus dem aus einem Ausgang 61 ein elektrisches Ausgangssignal entnehmbar ist, das dem elektrischen Datensignal d(t) entspricht.

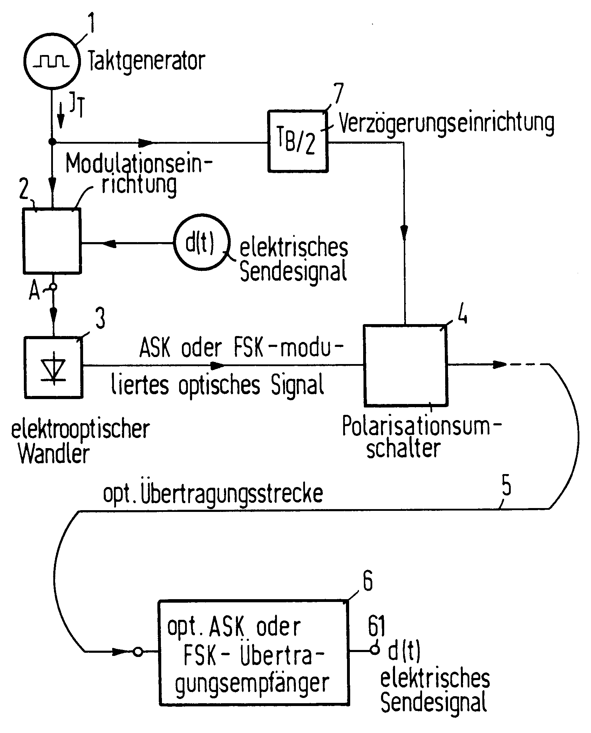

Neu bei der Vorrichtung nach Figur 1 ist, daß der Polarisationsumschalter 4 durch die Taktimpulse I_{T} umgeschaltet wird, die dem Polarisationsumschalter 4 durch eine Verzögerungseinrichtung 7 zugeleitet werden, welche jeden Taktimpuls um die halbe Taktperiode T_{B}/2 der Taktimpulse I_{T} verzögert, wodurch bewirkt wird, daß in der Mitte jeder Taktperiode und damit jedes Bits des dem Polarisationsumschalter 4 zugeführten modulierten optischen Signals und nur dort eine Polarisationsumschaltung erfolgt. Dies bewirkt, daß die Amplitude des Ausgangssignals d(t) am Ausgang 61 des Empfängers polarisationsunabhängig ist.

Polarisationsumschalter, wie sie bei der erfindungsgemäßen Vorrichtung benötigt werden, können z.B. auf einfache Weise mittels Phasenmodulatoren realisiert werden, wenn diese für orthogonale Polarisationszustände einen unterschiedlichen Phasenhub aufweisen. Z.B. können LiNbO₃-Phasenmodulatoren in Wellenleiterausführung zur Anwendung kommen. Das linear polarisierte optische Sendesignal wird unter 45° zur optischen Hauptachse des Kristalls eingekoppelt und die Amplitude der Steuerspannung so eingestellt, daß der Unterschied im Phasenhub zwischen TE-polarisiertem Licht und TM-polarisiertem Licht 180° beträgt. Am Ausgang des Phasenmodulators treten dann zueinander orthogonale Polarisationszustände auf.

## Patentansprüche

1. Verfahren zum Umtasten eines Polarisationszustandes eines modulierten optischen Sendesignals in Form einer mit einem bestimmten Takt getakteten Bitfolge auf der Senderseite eines optischen Übertragungssystems mit Überlagerungsempfang,
**dadurch gekennzeichnet,**
daß das Umtasten des Polarisationszustandes synchron mit dem bestimmten Takt durchgeführt und der jeweilige Umtastzeitpunkt in den Schwerpunkt jedes Bits der Bitfolge gelegt wird

2. Vorrichtung zur Durchführung einer Umtastung eines Polarisationszustandes eines modulierten optischen Sendesignals in Form einer mit einem bestimmten Takt getakteten Bitfolge auf der Senderseite eines optischen Übertragungssystems mit Überlagerungsempfang,
**gekennzeichnet durch**
einen auf der Senderseite angeordneten und synchron mit dem bestimmten Takt unschaltbaren optischen Polarisationsumschalter (4), dem das modulierte optische Sendesignal zu geleitet ist, und eine Verzögerungseinrichtung (7), durch die der bestimmte Takt, um eine halbe Taktperiode (T_{B}/2) verzögert, zu dem Polarisationsumschalter geleitet ist, so daß das Umtasten des Polarisationszustandes synchron mit dem bestimmten Takt durchgeführt und der jeweilige Umtastzeitpunkt in den Schwerpunkt jedes Bits der Bitfolge gelegt ist.

## Claims

1. Method for keying a polarization condition of a modulated optical transmission signal in the form of a bit sequence, clocked with a specified clock, on the transmitter side of an optical transmission system with heterodyne reception, characterized in that the keying of the polarization condition is carried out synchronously with the specified clock and the respective instant of keying is set to the centre of each bit of the bit sequence.

2. Device for carrying out a keying of a polarization condition of a modulated optical transmission signal in the form of a bit sequence, clocked with a specified clock, on the transmitter side of an optical transmission system with heterodyne reception, characterized by an optical polarization switching stage (4) which is disposed on the transmitter side and which can be switched synchronously with the specified clock, to which switching stage the modulated optical transmission signal is passed, and a delay device (7), by which the specified clock, delayed by half a clock period (T_{B}/2), is passed to the polarization switching stage, so that the keying of the polarization condition is carried out synchronously with the specified clock and the respective instant of keying is set to the centre of each bit of the bit sequence.

## Revendications

1. Procédé pour modifier un état de polarisation d'un signal d'émission optique modulé sous la forme d'un train binaire, cadencé au moyen d'une cadence déterminée, sur le côté émetteur d'un système de transmission optique avec réception superhétérodyne, caractérisé par le fait que l'on effectue la modification de l'état de polarisation en synchronisme avec la cadence déterminée et que l'on fixe l'instant respectif de modification au centre de chaque bit du train binaire.

2. Dispositif pour mettre en oeuvre une modification d'un état de polarisation d'un signal d'émission optique modulé sous la forme d'un train binaire, cadencé au moyen d'une cadence déterminée, sur le côté émetteur d'un système de transmission optique avec réception superhétérodyne, caractérisé par un commutateur optique de polarisation (4), qui est disposé sur le côté émission et peut être commuté en synchronisme avec la cadence déterminée et auquel est envoyé le signal d'émission optique modulé, et par un dispositif de retardement (7), au moyen duquel la cadence déterminée est envoyée, avec un retard égal à une demi-période de cadence (T_{B}/2), au commutateur de polarisation de sorte que la modification de l'état de polarisation s'effectue en synchronisme avec la cadence déterminée et que l'instant respectif de modification est fixé au centre de chaque bit du train binaire.
